# FASCICULE DE BREVET EUROPEEN

(11) **EP 1 077 891 B1**
(45) Date de publication et mention de la délivrance du brevet: **20.10.2004**
(21) Numéro de dépôt: 99918023.5
(22) Date de dépôt: 07.05.1999
(51) Int. Cl.: B65G 47/14

(54) **MECANISME D'ORIENTATION ET DE DISTRUBUTION AUTOMATIQUE DE PIECES**
AUTOMATISCHE AUSRICHTUNGS- UND AUSGABEVORRICHTUNG FÜR WERKSTÜCKE
MECHANISM FOR AUTOMATICALLY DIRECTING AND DISPENSING PARTS

(30) Priorité: 14.05.1998 FR 9806336
(43) Date de publication de la demande: 28.02.2001
(73) Titulaire: ADMV, 38460 Crémieu (FR)
(72) Inventeur: MALON, Stéphane, 38460 Crémieu (FR)
(74) Mandataire: Siloret, Patrick
(86) Numéro de dépôt international: PCT/FR1999/001080
(87) Numéro de publication internationale: WO 1999/058433

(56) Documents cités:
- DE-C- 893 744
- DE-U- 8 911 221
- LU-A- 56 905
- US-A- 3 682 301

## Description

La présente invention concerne un mécanisme qui, à partir d'un ensemble de pièces en vrac, permet d'orienter ces pièces et de les distribuer, en conservant une orientation qui peut varier selon l'application traitée. Plus particulièrement, ce mécanisme est conçu pour l'orientation et la distribution automatiques de pièces qui possèdent un centre de gravité décalé par rapport à leur milieu, dans le sens de la longueur. Un tel mécanisme est connu, par exemple du document LU-A-56905. A titre d'exemple de telles pièces, on peut ici citer des petites brosses de mascara, dont le manche relativement pesant engendre un décalage du centre de gravité.

D'une manière générale, on réalise actuellement l'orientation et la distribution de pièces, dans l'industrie, au moyen de dispositifs à bol vibrant, ou au moyen de distributeurs à lames. Ces dispositifs ne donnent pas entièrement satisfaction. En particulier, ils comportent des risques de coincement mécanique, ils ne permettent pas une orientation avec une fiabilité totale, ils risquent de détériorer l'état de surface de pièces fragiles, et ils possèdent des cadences de distribution assez limitées. De plus, les dispositifs actuels n'acceptent que des pièces de dimensions bien déterminées, et ils ne peuvent s'adapter, sans réglage ou modifications importantes, à des pièces de formats divers.

La présente invention vise à éliminer ces inconvénients, en fournissant, pour les pièces du genre ici considéré, un mécanisme d'orientation et de distribution particulièrement fiable, permettant une distribution à cadence élevée, et apte à distribuer des pièces de dimensions variables, avec un minimum de réglage, tout en évitant de détériorer ces pièces.

A cet effet, l'invention a essentiellement pour objet un mécanisme d'orientation et de distribution automatique de pièces qui possèdent un centre de gravité décalé par rapport à leur milieu, dans le sens de la longueur, comprenant, en combinaison ;
- une première chaîne sans fin, portant sur toute sa longueur des godets, répartis selon un pas régulier et possédant chacun un logement apte à recevoir une pièce,
- une seconde chaîne sans fin,
- des moyens motorisés d'entraînement synchronisé des deux chaînes sans fin,
- des moyens d'amenage des pièces au-dessus desdites chaînes, assurant un guidage de la descente par gravité de ces pièces, les amenant à tomber dans les logements des godets du brin supérieur de la première chaîne sans fin,
caractérisé en ce que la première chaîne sans fin s'étend dans un plan vertical ou oblique, avec ledit brin supérieur horizontal, en ce que la seconde chaîne sans fin s'étend dans un plan perpendiculaire à celui de la première chaîne sans fin, sensiblement au niveau du brin supérieur de cette première chaîne, et la seconde chaîne sans fin porte sur toute sa longueur des guides mobiles répartis selon un pas régulier égal au pas des godets précités, les guides mobiles passant au-dessus des godets du brin supérieur de la première chaîne sans fin en se situant en correspondance avec les intervalles qui existent entre les logements de ces godets, et les moyens d'amenage des pièces au-dessus desdites chaînes les amènent à rencontrer les guides mobiles avant qu'elles ne tombent dans les logements des godets du brin supérieur de la première chaîne sans fin.

On réalise ainsi un mécanisme capable de traiter en continu les pièces à orienter, à partir d'un stock de pièces en vrac, une petite quantité de pièces étant traitées simultanément. Ces pièces sont d'abord déversées au-dessus du mécanisme proprement dit, par les moyens d'amenage qui peuvent être notamment réalisés sous la forme d'un distributeur à lames, d'un type connu, lequel élève les pièces depuis une trémie de stockage en vrac, et les libère avec une pré-orientation horizontale. Les pièces ainsi libérées chutent, ou glissent sur un plan fortement incliné, pour rencontrer d'abord les guides mobiles et terminer leur chute dans les logements des godets, où ces pièces sont maintenues en position "debout". Les pièces sont ainsi orientées, du fait que, lorsqu'elles rencontrent les sommets des guides mobiles, elles basculent en se retrouvant majoritairement avec leur centre de gravité vers le bas.

Une conformation et une répartition appropriées des guides mobiles, portés par la seconde chaîne sans fin, garantissent un processus d'orientation efficace.

Avantageusement, ces guides mobiles comprennent des guides de hauteurs différentes, de préférence tous pourvus à leur extrémité supérieure d'une pointe présentant deux faces latérales inclinées en sens opposés l'une de l'autre. Selon un mode de réalisation particulier, ces guides mobiles comprennent des guides de trois hauteurs différentes, soit :
- des guides de grande hauteur, répartis sur la seconde chaîne sans fin selon des intervalles égaux au quadruple du pas des galets portés par la première chaîne sans fin,
- des guides de hauteur moyenne, répartis eux aussi selon des intervalles égaux au quadruple du pas des godets, et fixés sur la seconde chaîne sans fin au milieu des intervalles séparant les guides de grande hauteur, et
- des guides de faible hauteur, répartis selon des espacements égaux ou double du pas des godets, et fixés sur la seconde chaîne sans fin dans les intervalles définis entre les précédents guides de grande hauteur et de moyenne hauteur.

De préférence, l'intervalle entre deux guides consécutifs de grande hauteur est supérieur à la longueur des pièces à orienter, de manière à éviter tout coincement de ces pièces entre les guides, et à garantir ainsi leur chute dans les godets.

De plus, les guides mobiles, portés par la seconde chaîne sans fin, sont avantageusement réalisés dans une matière plastique, pour ne pas détériorer les pièces qui tombent sur les pointes de ces guides.

Le fonctionnement du mécanisme d'orientation et de sélection automatique de pièces, objet de l'invention, nécessite une parfaite synchronisation de l'entraînement des deux chaînes sans fin, de manière à maintenir les intervalles entre les guides mobiles en correspondance avec les logements des godets situés sur le brin supérieur de la première chaîne, et à garantir ainsi la chute des pièces jusqu'au fond des logements des godets. Selon une forme de réalisation particulière de l'invention, les moyens motorisés d'entraînement synchronisé des deux chaînes sans fin, portant respectivement les godets et les guides mobiles, sont constitués par un moto-réducteur accouplé à une roue à chaîne motrice sur laquelle passe la première chaîne sans fin, portant les godets, tandis qu'un dispositif de transmission par engrenages à renvoi d'angle relie l'axe de l'une des roues motrice ou de renvoi de la première chaîne sans fin à un pignon moteur sur lequel passe la seconde chaîne sans fin, portant les guides mobiles.

On notera que les deux chaînes sans fin ne possèdent pas nécessairement la même longueur. Avantageusement, le brin supérieur horizontal de la première chaîne sans fin, portant les godets, se prolonge au-delà de la seconde chaîne sans fin, portant les guides mobiles, ceci dans le sens d'avancement des godets. Ainsi, les guides mobiles s'escamotent à partir d'un certain point, tandis que les godets poursuivent leur parcours horizontal sur le brin supérieur de la première chaîne sans fin, de manière à former une zone dans laquelle les pièces mal orientées dans les godets (pièces en nombre minoritaire, mais existantes) peuvent être automatiquement évacuées par simple basculement sous l'effet de la gravité, leur centre de gravité se trouvant décalé vers le haut.

Au-delà de cette zone de basculement et d'évacuation des pièces mal orientées, on prévoit encore avantageusement des guides fixes, qui entourent la première chaîne sans fin et ses godets autour d'une des des roues motrice ou de renvoi, et le long d'une portion de son brin inférieur, pour assurer la retenue des pièces correctement orientées, jusqu'à un point de libération où ces pièces orientées peuvent être prises en charge par d'autre moyens de transfert ou de traitement, extérieurs au mécanisme d'orientation et de sélection.

Dans l'ensemble, l'on obtient grâce à l'invention un mécanisme d'orientation et de sélection compact, qui permet de traiter simultanément une petite quantité de pièces, avec un principe de défilement en continu qui, au total, autorise des cadences non atteintes, ou mal maîtrisées, par les dispositifs actuels ; ainsi, le mécanisme objet de l'invention peut traiter de 60 à 150 pièces à la minute (selon les pièces à distribuer).

Dans la mesure où ses guides mobiles sont en matière plastique, le mécanisme objet de l'invention permet aussi de respecter l'état de surface et les éventuelles décorations des pièces fraitées ; ce mécanisme peut donc distribuer des pièces fragiles, telles que des pièces ou des sous-ensembles finis, destinées à des ensembles de remplissage, de montage ou de conditionnement.

Le mécanisme, objet de l'invention, est aussi capable de distribuer des pièces d'une même famille, présentant des variations géométriques et/ou dimensionnelles importantes d'une pièce à une autre, ceci avec un minimum de réglages, avec ou sans changement de format, tel que celui des godets.

De toute façon, l'invention sera mieux comprise à l'aide de la description qui suit, en référence au dessin schématique annexé représentant, à titre d'exemple, une forme d'exécution de ce mécanisme d'orientation et de distribution automatique de pièces :
Figure 1 est une vue de côté, avec coupe partielle, d'une machine incorporant le mécanisme objet de la présente invention ;
Figure 2 est une vue de face de ce mécanisme, pouvant être considérée comme une coupe suivant la ligne II-II de figure 1, à échelle agrandie ;
Figure 3 est une vue de dessus du mécanisme visible sur la figure 2 ;
Figure 4 est une vue en coupe transversale de ce mécanisme, suivant la ligne IV-IV de figure 2.

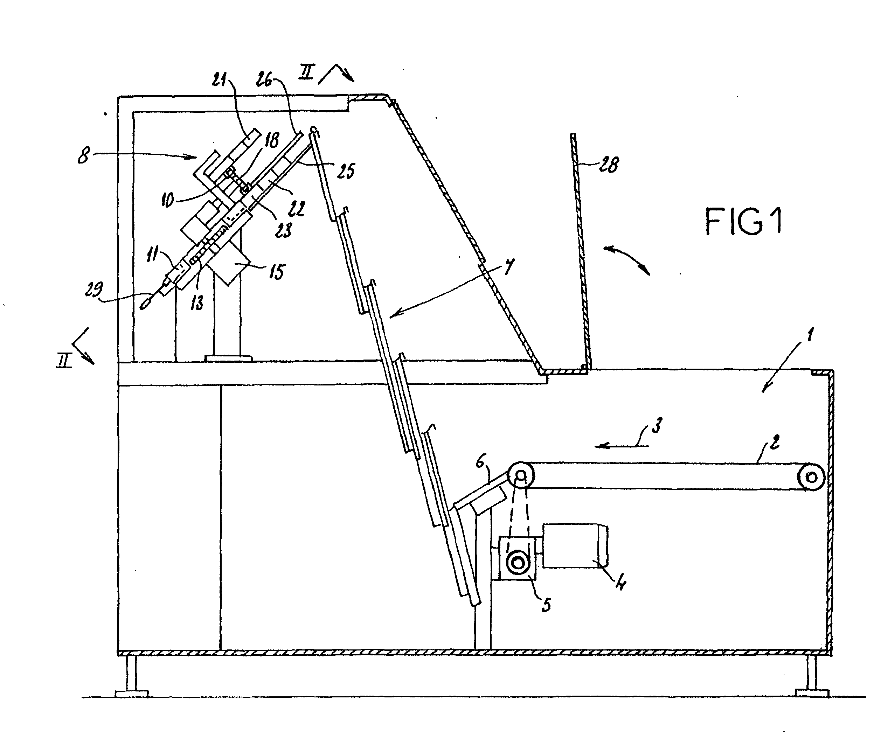

La machine représentée dans son ensemble sur la figure 1, comprend une trémie 1 pour le stockage de pièces en vrac, au fond de laquelle est disposé un tapis sans fin horizontal 2, entraîné selon la flèche 3 par un moteur électrique 4, avec interposition d'un réducteur 5. A l'avant du tapis sans fin 2 est prévu un court plan incliné 6, permettant d'alimenter un distributeur à lames 7, d'un type connu en soi, qui s'étend en oblique vers le haut, jusqu'à la partie supérieure de la machine.

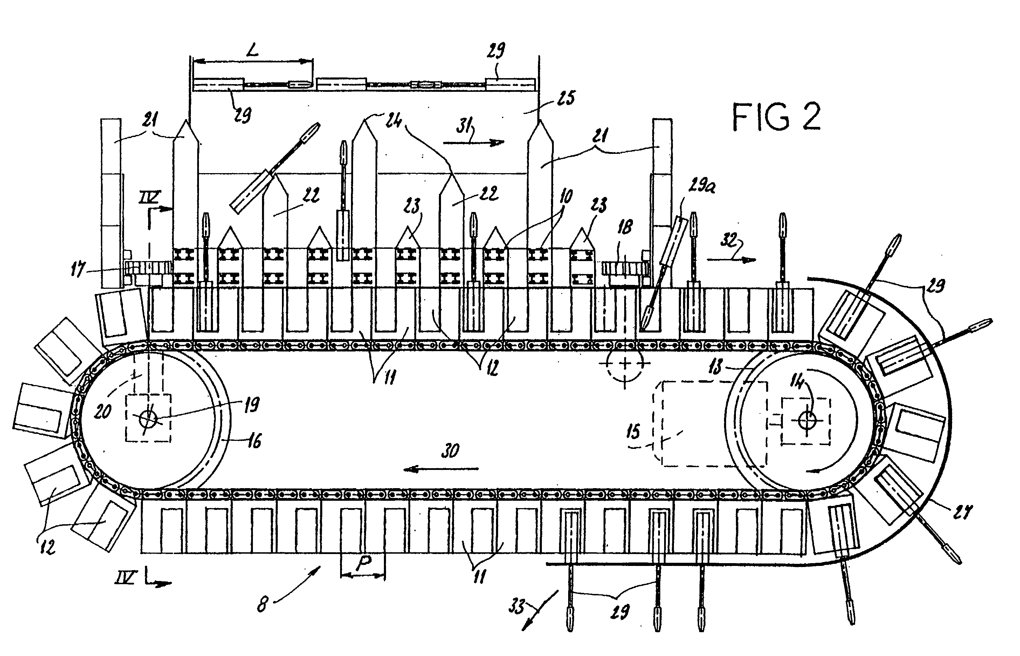

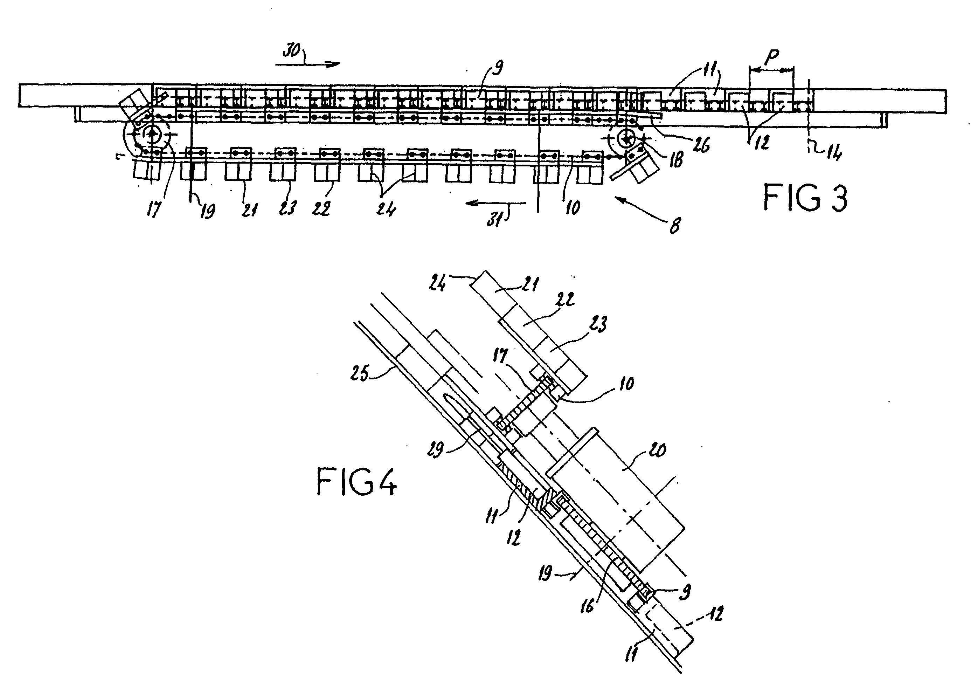

Dans cette partie supérieure est disposé, en position inclinée, le mécanisme d'orientation et de distribution, désigné dans son ensemble par le repère 8, et représenté plus en détail aux figures 2 à 4.

Le mécanisme 8 comprend une première chaîne sans fin 9, ou chaîne principale, s'étendant transversalement dans un plan oblique, et une seconde chaîne sans fin 10, s'étendant dans un plan perpendiculaire à celui de la première chaîne 9, sensiblement au niveau du brin supérieur horizontal de cette première chaîne.

La chaîne principale 9 porte extérieurement, sur toute sa longueur, des godets 11 tous identiques, fixés selon un pas régulier P sur les maillons de cette chaîne 9. Chaque godet 11 possède un logement 12, relativement profond, débouchant sur la face supérieure de ce godet 11, ainsi que sur l'une de ses faces latérales. La chaîne principale 9 passe sur une roue à chaîne motrice 13, entraînée en rotation autour de son axe 14 par un moto-réducteur 15, ainsi que sur une roue de renvoi 16.

La seconde chaîne sans fin 10 passe sur un pignon moteur 17 et sur un pignon de renvoi 18. Le pignon moteur 17 de cette seconde chaîne 10 est entraîné en rotation, à partir de l'axe 19 de la roue de renvoi 16 de la chaîne principale 9, par l'intermédiaire de pignons ici non détaillés avec renvoi d'angle, situés en 20, réalisant une synchronisation des deux chaînes 9 et 10.

La seconde chaîne sans fin 10 porte, latéralement, des guides mobiles de différentes hauteurs 21, 22 et 23. Les guides 21, 22 et 23 sont fixés latéralement sur les maillons de la chaîne 10, selon un pas régulier égal au pas P des godets 11. De plus, les guides mobiles 21, 22 et 23 passent au-dessus des godets 11 du brin supérieur de la chaîne principale 9, en se situant en correspondance avec les intervalles libres existant entre les logements 12 de ces godets 11. Cependant, la seconde chaîne sans fin 10 est plus courte que la première chaîne sans fin 9. Ainsi, alors que les guides mobiles 21, 22 et 23 portés par la seconde chaîne 9 s'escamotent, le brin supérieur de la première chaîne 9, portant les godets 11, se prolonge sur une certaine longueur, dans le sens d'avancement de ces godets 11, avant de parvenir à la roue motrice 13. Le brin de retour de la seconde chaîne 10 peut passer devant ou derrière le plan dans lequel évolue la première chaîne 9.

Tous les guides mobiles 21, 22 et 23 possèdent une extrémité supérieure en forme de pointe 24, présentant deux faces latérales d'inclinaisons opposées. Ces guides 21, 22 et 23 sont tous réalisés en une matière plastique. On distingue ici des guides de trois hauteurs différentes :
- Les guides 21, de grande hauteur, sont répartis sur la chaîne 10 selon des intervalles égaux au quadruple du pas P des godets 11.
- Les guides 22, de hauteur moyenne, sont répartis aussi selon des intervalles égaux au quadruple du pas P des godets 11, et sont fixés sur la chaîne 10, au milieu des intervalles séparant les guides 21 de grande hauteur.
- Les guides 23, de faible hauteur, sont répartis selon des espacements égaux au double du pas P des godets 11, et sont fixés sur la chaîne 10 dans les intervalles définis entre les précédents guides 21 et 22.

Une surface de glissement oblique 25, parallèle au plan de la chaîne principale 9, s'étend entre le sommet du distributeur à lames 7 et la région des deux chaînes 9 et 10. Il est aussi prévu une plaque 26, par exemple transparente, placée devant la chaîne principale 9 et obturant les débouchés latéraux des logements 12 des godets 11. Enfin, des guides fixes 27 entourent ladite chaîne principale 9, sur une partie du trajet des godets 11, notamment en demi-cercle autour de la roue motrice 13 et le long d'une portion du brin inférieur de cette chaîne principale 9.

En cours de fonctionnement, le tapis sans fin 2 et le distributeur à lames 7 sont actionnés, de telle sorte que les pièces en vrac, précédemment introduites dans la trémie 1 en ouvrant la porte supérieure 28 de celle-ci, sont déplacées vers l'avant, puis parviennent dans la partie supérieure de la machine. Comme montré sur la figure 2, les pièces 29, amenées au sommet de la machine par le distributeur à lames 7, sont pré-orientées horizontalement mais dans un sens incontrôlé (pièces tournées de façon aléatoire vers la droite ou vers la gauche).

Ces pièces 29 parviennent alors sur la surface de glissement 25, et elles chutent ainsi sur le mécanisme 8, dont les deux chaînes sans fin 9 et 10 sont entraînées en synchronisme, suivant les flèches 30 et 31, en un mouvement continu, à vitesse réglable.

Dans leur descente, les pièces 29 rencontrent les guides 21, 22 et 23, et plus particulièrement les pointes 24 de ces guides. Les pièces 29 sont canalisées dans leur chute par ces guides , et elles terminent leur chute dans les logements 12 des godets 11. On notera que l'intervalle entre deux guides 21 consécutifs de grande hauteur est supérieur à la longueur L des pièces 29, de manière à garantir la chute de ces pièces 29, en évitant leur coincement en position horizontale entre les pointes 24 respectives de deux guides 21 consécutifs. De plus, les pentes des faces inclinées, situées de part et d'autre de chaque pointe 24 d'un guide 21, 22 ou 23, sont choisies de manière à éviter aussi tout coincement des pièces 29 en position oblique, qui les empêcherait de tomber jusqu'au fond des logements 12 des godets 11.

S'agissant ici de pièces allongées 29, dont le centre de gravité est décalé par rapport au milieu de leur longueur L, celles-ci basculent et glissent sur les pointes 24 des guides 21, 22 et 23, et elles poursuivent leur chute en étant orientées parallèlement à ces guides, majoritairement avec leur centre de gravité vers le bas. Les pièces 29 tombent finalement dans les logements 12 des godets 11 situés à l'instant considéré sur le brin supérieur de la chaîne principale 9.

Cette chaîne 9 étant entraînée suivant la flèche 30, les pièces 29 tombées dans les godets 11 sont entraînées en avant suivant la flèche 32, en échappant aux guides mobiles 21, 22 et 23 qui sont écartés des godets 11 et escamotés en passant, avec la seconde chaîne 10, sur le pignon de renvoi 18. Les pièces mal orientées dans les godets 11, telle que la pièce repérée 29a, prennent alors une orientation oblique et basculent, de sorte qu'elles sont automatiquement évacuées des godets 11 ; ces pièces éliminées sont recyclées vers le stock de pièces en vrac.

Les pièces 29 correctement orientées restent en place dans les godets 11. En arrivant dans la région de la roue à chaîne motrice 13, ces pièces 29 sont retournées, en étant retenues par les guides fixes 27. ces pièces 29 parviennent ainsi, toutes orientées dans le sens finalement désiré, jusque sous le brin inférieur de la chaîne principale 9, où elles sont encore retenues, sur un certain parcours, par les guides fixes 27.

Enfin, parvenues à l'extrémité inférieure des guides fixes 27, les pièces 29 orientées sont libérées et peuvent s'extraire des logements 12 des godets 11, sous l'effet de la gravité. Les pièces 29, s'évacuant suivant la flèche 33, peuvent être reprises, à cet endroit, par un autre convoyeur à godets, par une bande transporteuse (dans le cas de pièces stables) ou par tout autre dispositif de transfert approprié, ou encore manuellement. Les pièces 29 orientées peuvent aussi être reprises directement par une machine, effectuant sur ces pièces une opération.

Le mécanisme 8 d'orientation et de distribution automatique de pièces, précédemment décrit, est applicable entre autres à des brosses de mascara, des réservoirs de mascara, des pompes de vaporisateur, des valves, des étuis de rouge à lèvres, des flacons en matière plastique, des bouchons, et il convient, plus généralement, à l'orientation et la distribution de toutes pièces, articles et produits, dans les domaines cosmétique et autres, pourvu que le centre de gravité de ces pièces soit décalé par rapport à leur milieu, dans le sens de la longueur.

Comme il va de soi, l'invention ne se limite pas à la seule forme d'exécution de ce mécanisme d'orientation et de distribution automatique de pièces qui a été décrite ci-dessus, à titre d'exemple ; elle en embrasse, au contraire, toutes les variantes de réalisation et d'application respectant le même principe. En particulier, l'on ne s'éloignerait pas du cadre de l'invention en utilisant d'autres moyens pour l'entraînement synchronisé des deux chaînes 9 et 10, portant respectivement les godets 11 et les guides mobiles 21, 22 et 23, ou en modifiant la matière constitutive de ces guides, ou encore en prévoyant plus ou moins de trois catégories de guides mobiles, de hauteurs distinctes. De même, l'on ne s'écarterait pas de l'esprit de l'invention en utilisant le même mécanisme 8 d'orientation et de distribution en association avec un dispositif d'amenage des pièces 29 autre qu'un distributeur à lames, ou en destinant ce mécanisme à des pièces de forme non allongée, du moment que ces pièces possèdent un centre de gravité décalé par rapport à leur milieu, suivant une certaine direction désignée comme "longueur" mais ne correspondant pas nécessairement à leur plus grande dimension.

## Revendications

1. Mécanisme d'orientation et de distribution automatique de pièces (29) qui possèdent un centre de gravité décalé par rapport à leur milieu, dans le sens de la longueur (L), comprenant, en combinaison :
- une première chaîne sans fin (9), portant sur toute sa longueur des godets (11), répartis selon un pas régulier (P) et possédant chacun un logement (12) apte à recevoir une pièce (29),
- une seconde chaîne sans fin (10),
- des moyens motorisés (13 à 20) d'entraînement synchronisé des deux chaînes sans fin (9, 10),
- des moyens (7, 25) d'amenage des pièces (29) au-dessus desdites chaînes (9, 10), assurant un guidage de la descente par gravité de ces pièces (29), les amenant à tomber dans les logements (12) des godets (11) du brin supérieur de la première chaîne sans fin (9),
**caractérisé en ce que** la première chaîne sans fin (9) s'étend dans un plan vertical ou oblique, avec ledit brin supérieur horizontal, **en ce que** la seconde chaîne sans fin (10) s'étend dans un plan perpendiculaire à celui de la première chaîne sans fin (9), sensiblement au niveau du brin supérieur de cette première chaîne (9), et la seconde chaîne sans fin (10) porte sur toute sa longueur des guides mobiles (21, 22, 23) répartis selon un pas régulier égal au pas (P) des godets (11) précités, les guides mobiles (21, 22, 23) passant au-dessus des godets (11) du brin supérieur de la première chaîne sans fin (9) en se situant en correspondance avec les intervalles qui existent entre les logements (12) de ces godets (11), et les moyens (7, 25) d'amenage des pièces (29) au-dessus desdites chaînes (9, 10) les amènent à rencontrer les guides mobiles (21, 22, 23) avant qu'elles ne tombent dans les logements (12) des godets (11) du brin supérieur de la première chaîne sans fin (9).

2. Mécanisme d'orientation et de sélection automatique de pièces selon la revendication 1, **caractérisé en ce que** les guides mobiles (21, 22, 23), portés par la seconde chaîne sans fin (10), comprennent des guides de hauteurs différentes, de préférence tous pourvus à leur extrémité supérieure d'une pointe (24) présentant deux faces latérales inclinées en sens opposés l'une de l'autre.

3. Mécanisme d'orientation et de sélection automatique de pièces selon la revendication 2, **caractérisée en ce que** les guides mobiles (21, 22, 23), portés par la seconde chaîne sans fin (10), comprennent des guides de trois hauteurs différentes, soit :
- des guides (21) de grande hauteur, répartis sur cette chaîne (10) selon des intervalles égaux au quadruple du pas (P) des goaets (11) portés par la première chaîne sans fin (9),
- des guides (22) de hauteur moyenne, répartis eux aussi selon des intervalles égaux au quadruple du pas (P) des godets (11), et fixés sur la seconde chaîne sans fin (10) au milieu de intervalles séparant les guides (21) de grande hauteur, et
- des guides (23) de faible hauteur, répartis selon des espacements égaux ou double du pas (P) des godets (11), et fixés sur la seconde chaîne sans fin (10) dans les intervalles définis entre les précédents guides (21, 22) de grande hauteur et de hauteur moyenne.

4. Mécanisme d'orientation et de sélection automatique de pièces selon la revendication 3, **caractérisé en ce que** l'intervalle entre deux guides (21) consécutifs de grande hauteur est supérieur à la longueur (L) des pièces (29).

5. Mécanisme d'orientation et de sélection automatique de pièces selon l'une quelconque des revendications 1 à 4, **caractérisé en ce que** les guides mobiles (21, 22, 23), portés par la seconde chaîne sans fin (10), sont réalisés dans une matière plastique.

6. Mécanisme d'orientation et de sélection automatique de pièces selon l'une quelconque des revendications 1 à 5, caractérisé en que les moyens motorisés d'entraînement synchronisé des deux chaînes sans fin (9, 10), portant respectivement les godets (11) et les guides mobiles (21,22,23), sont constitués par un moto-réducteur (15) accouplé à une roue à chaîne motrice (13) sur laquelle passe la première chaîne sans fin (9), portant les godets (11), tandis qu'un dispositif de transmission par engrenages à renvoi d'angle (20) relie l'axe (19) de l'une des roues motrice (13) ou de renvoi (16) de la première chaîne sans fin (9) à un pignon moteur (17) sur lequel passe la seconde chaîne sans fin (10), portant les guides mobiles (21, 22, 23).

7. Mécanisme d'orientation et de sélection automatique de pièces selon l'une quelconque des revendications 1 à 6, **caractérisé en ce que** le brin supérieur horizontal de la première chaîne sans fin (9), portant les godets (12), se prolonge au-delà de la seconde chaîne sans fin (10), portant les guides mobiles (21, 22, 23), ceci dans le sens d'avancement des godets (11 ), de manière à former une zone dans laquelle les pièces (29a) mal orientées dans les godets (11) peuvent être automatiquement évacuées, par simple basculement sous l'effet de la gravité.

8. Mécanisme d'orientation et de sélection automatique de pièces selon la revendication 7, **caractérisé en ce que** sont prévus, au-delà de la zone de basculement et d'évacuation des pièces (29a) mal orientées, des guides fixes (27) qui entourent la première chaîne sans fin (9) et ses godets (11) autour d'une de ses roues motrice (13) ou de renvoi (16) et le long d'une portion de son brin inférieur, pour assurer la retenue des pièces (29) correctement orientées jusqu'à un point de libération où ces pièces (29) orientées peuvent être prises en charge par d'autres moyens de transfert ou de traitement extérieurs au mécanisme (8) d'orientation et de sélection.

9. Mécanisme d'orientation et de sélection automatique de pièces selon l'une quelconque des revendications 1 à 8, **caractérisé en ce que** les moyens d'amenage des pièces (29) sont réalisés sous la forme d'un distributeur à lames (7), qui élève les pièces (29) depuis une trémie de stockage en vrac (1), et les libère avec une pré-orientation horizontale.

10. Mécanisme d'orientation et de sélection automatique de pièces selon la revendication 9, **caractérisé en ce qu'**une surface de glissement oblique (25), parallèle au plan de la première chaîne sans fin (9), s'étend entre le sommet du distributeur à lames (7) et la région des deux chaînes (9, 10).

## Claims

1. Mechanism for automatic orientation and distribution of pieces (29) which have a centre of gravity offset relative to their middle, in the direction of length (L), which comprises, in combination:
- a first endless chain (9) carrying along its whole length cups (11) distributed at a uniform pitch (P) and each having a housing (12) able to receive a piece (29),
- a second endless chain (10),
- motorized means (13-20) for synchronized driving of the two endless chains (9, 10),
- means (7, 25) for bringing the pieces (29) over said chains (9, 10) adapted for guiding the descent by gravity of these pieces (29), bringing them to fall into the housings (12) of the cups (11) of the upper run of the first endless chain (9),
**characterized in that** the first endless chain (9) extends in a vertical or oblique plane, with said upper horizontal run, **in that** the second endless chain (10) extends in a plane perpendicular to that of the first endless chain (9), substantially at the level of the upper run of this first chain (9), and the second endless chain (10) carries along its whole length moveable guides (21, 22, 23) distributed at a uniform pitch equal to the pitch (P) of the above-mentioned cups (11), the moveable guides (21, 22, 23) passing over the cups (11) of the upper run of the first endless chain (9) and being situated in correspondence with the intervals which exist between the housings (12) of these cups (11), and the means (7, 25) for bringing the pieces (29) over said chains (9, 10) bring them to meet the moveable guides (21, 22, 23) before they fall into the housings (12) of the cups (11) of the upper run of the first endless chain (9).

2. Mechanism for automatic orientation and selection of pieces as described in claim 1, **characterised by** the fact that the movable guides (21, 22, 23), carried by the second endless chain (10), comprise guides of different heights, preferably all provided at their upper end with a point (24) having two lateral faces inclined in directions opposite to each other.

3. Mechanism for automatic orientation and selection of pieces as described in claim 2, **characterised by** the fact that the movable guides (21, 22, 23), carried by the second endless chain (10), comprise guides of three different heights, namely:
- guides (21) of large height, distributed along this chain (10) at intervals equal to four times the pitch (P) of the cups (11) carried by the first endless chain (9),
- guides (22) of medium height, also distributed at intervals equal to four times the pitch (P) of the cups (11), and fixed to the second endless chain (10) in the middle of the intervals separating the guides (21) of large height, and
- guides (23) of small height, distributed at spacings equal to or double the pitch (P) of the cups (11), and fixed to the second endless chain (10) in the intervals defined between the above guides (21, 22) of large height and of medium height.

4. Mechanism for automatic orientation and selection of pieces as described in claim 3, **characterised by** the fact that the interval between two consecutive guides (21) of large height is greater than the length (L) of the pieces (29).

5. Mechanism for automatic orientation and selection of pieces as described in any one of claims 1 to 4, **characterised by** the fact that the movable guides (21, 22, 23), carried by the second endless chain (10), are made of a plastics material.

6. Mechanism for automatic orientation and selection of pieces as described in any one of claims 1 to 5, **characterised by** the fact that the motorized means for synchronized driving of the two endless chains (9, 10), respectively carrying the cups (11) and the movable guides (21, 22, 23) consist of a gearmotor (15) linked to a drive-chain wheel (13) over which the first endless chain (9), carrying the cups (11), passes, while a bevel gear transmission device (20) connects the shaft (19) of one of the drive (13) or return (16) wheels of the first endless chain (9) to a drive pinion (17) over which the second endless the chain (10), carrying the movable guides (21, 22, 23), passes.

7. Mechanism for automatic orientation and selection of pieces as described in any one of claims 1 to 6, **characterised by** the fact that the upper horizontal run of the first endless chain (9), carrying the cups (12), is extended beyond the second endless chain (10), carrying the movable guides (21, 22, 23), this in the direction of advance of the cups (11), in such a manner as to form a zone in which the pieces (29a) wrongly oriented in the cups (11) can be automatically removed, by simple tipping under the influence of gravity.

8. Mechanism for automatic orientation and selection of pieces as described in claim 7, **characterised by** the fact that, beyond the zone for tipping and removal of wrongly oriented pieces (29a), fixed guides (27) are provided which surround the first endless chain (9) and its cups (11) around one of its drive (13) or return (16) wheels and along a portion of its lower run, to ensure the retention of the correctly oriented pieces (29) up to a release point in which these oriented pieces (29) can be taken over by other transfer or processing means external to the mechanism (8) for orientation and selection.

9. Mechanism for automatic orientation and selection of pieces as described in any one of claims 1 to 8, **characterised by** the fact that the means for bringing pieces (29) are made in the form of a plate distributor (7), which lifts the pieces (29) from a bulk storage hopper (1) and releases them with horizontal preorientation.

10. Mechanism for automatic orientation and selection of pieces as described in claim 9, **characterised by** the fact that an oblique slide surface (25) parallel with the plane of the first endless chain (9), extends between the top of the plate distributor (7) and the region of the two chains (9, 10).

## Patentansprüche

1. Automatischer Orientierungs- und Verteilungsmechanismus für Teile (29), die einen bezüglich ihrer Mitte in Längsrichtung (L) versetzten Schwerpunkt besitzen, in Kombination umfassend:
- eine erste Endloskette (9), die auf ihrer gesamten Länge Schaufeln (11) trägt, die in regelmäßigen Schritten (P) verteilt sind und jeweils eine Aufnahme (12) besitzen, die geeignet ist, ein Teil (29) aufzunehmen,
- eine zweite Endloskette (10),
- motorisierte Mittel (13 bis 20) zum synchronisierten Antrieb der zwei Endlosketten (9, 10),
- Mittel (7, 25) zur Zuführung der Teile (29) über den Ketten (9, 10), welche eine Führung dieser Teile (29) bei der Abwärtsbewegung durch Schwerkraft gewährleisten und sie zum Fallen in die Aufnahmen (12) der Schaufeln (11) des oberen Stranges der ersten Endloskette (9) bringt,
**dadurch gekennzeichnet, dass** sich die erste Endloskette (9) mit dem oberen horizontalen Strang auf einer vertikalen oder schiefen Ebene erstreckt, dass sich die zweite Endloskette (10) auf einer zur Ebene der oberen Kette orthogonalen Ebene erstreckt, und zwar im Wesentlichen im Bereich des oberen Stranges dieser ersten Kette (9), und die zweite Endloskette (10) auf ihrer gesamten Länge bewegliche Führungen (21, 22, 23) trägt, die in regelmäßigen Schritten gleich den Schritten (P) der vorgenannten Schaufeln (11) verteilt sind, wobei die beweglichen Führungen (21, 22, 23) über den Schaufeln (11) des oberen Stranges der ersten Endloskette (9) verlaufen, indem sie sich entsprechend den Intervallen zwischen den Aufnahmen (12) dieser Schaufeln (11) platzieren, und die Mittel zur Zuführung (7, 25) der Teile (29) über den Ketten (9, 10) sie in Kontakt mit den beweglichen Führungen (21, 22, 23) bringen, bevor sie in die Aufnahmen (12) der Schaufeln (11) des oberen Stranges der ersten Endloskette (9) fallen.

2. Automatischer Orientierungs- und Auswahlmechanismus für Teile nach Anspruch 1,
**dadurch gekennzeichnet, dass** die von der zweiten Endloskette (10) getragenen beweglichen Führungen (21, 22, 23) Führungen mit unterschiedlichen Höhen umfassen, die bevorzugt alle an ihrem oberen Ende mit einer Spitze (24) versehen sind, die zwei voneinander in entgegengesetzter Richtung geneigte Seitenflächen aufweisen.

3. Automatischer Orientierungs- und Auswahlmechanismus für Teile nach Anspruch 2,
**dadurch gekennzeichnet, dass** die von der zweiten Endloskette (10) getragenen beweglichen Führungen (21, 22, 23) Führungen mit drei unterschiedlichen Höhen umfassen, nämlich:
- Führungen (21) mit großer Höhe, die auf dieser Kette (10) in Intervallen verteilt sind, die gleich dem vierfachen Schritt (P) der von der ersten Endloskette (9) getragenen Schaufeln (11) sind,
- Führungen (22) mit mittlerer Höhe, die ebenfalls in Intervallen verteilt sind, die gleich dem vierfachen Schritt (P) der von der ersten Endloskette (9) getragenen Schaufeln (11) sind, und auf der zweiten Endloskette (10) in der Mitte der Intervalle, die die Führungen mit großer Höhe trennen, befestigt sind, und
- Führungen (23), mit geringer Höhe, die in Abständen verteilt sind, die gleich dem Schritt (P) oder das Doppelte des Schritts (P) der Schaufeln (11 ) sind, und auf der zweiten Endloskette (10) in den Intervallen befestigt sind, die zwischen den vorhergehenden Führungen (21, 22) mit großer und mittlerer Höhe definiert sind.

4. Automatischer Orientierungs- und Auswahlmechanismus für Teile nach Anspruch 3,
**dadurch gekennzeichnet, dass** das Intervall zwischen zwei aufeinanderfolgenden Führungen (21) mit großer Höhe größer als die Länge (L) der Teile (29) ist.

5. Automatischer Orientierungs- und Auswahlmechanismus für Teile nach einem der Ansprüche 1 bis 4,
**dadurch gekennzeichnet, dass** die beweglichen Führungen (21, 22, 23), die von der zweiten Endloskette (10) getragen werden, aus einem Kunststoff hergestellt sind.

6. Automatischer Orientierungs- und Auswahlmechanismus für Teile nach einem der Ansprüche 1 bis 5,
**dadurch gekennzeichnet, dass** die motorisierten Mittel zum synchronisierten Antrieb der zwei Endlosketten (9, 10), die die Schaufeln (11) bzw. die beweglichen Führungen (21, 22, 23) tragen, von einem Getriebemotor (15) gebildet sind, der mit einem Rad mit Antriebskette (13) gekoppelt ist, auf dem die erste Endloskette (9) läuft, welche die Schaufeln (11) trägt, während eine Vorrichtung zur Übertragung durch Räderwerke mit Zahnradvorgelege (20) die Achse (19) des Antriebsrades (13) oder des Nachlaufrades (16) der ersten Endloskette (9) mit einem Antriebsritzel (17) verbindet, auf dem die zweite Endloskette (10) läuft, die die beweglichen Führungen (21, 22, 23) trägt.

7. Automatischer Orientierungs- und Auswahlmechanismus für Teile nach einem der Ansprüche 1 bis 6,
**dadurch gekennzeichnet, dass** der horizontale obere Strang der ersten Endloskette (9), die die Schaufeln (11) trägt, über die zweite Endloskette (10), die die beweglichen Führungen (21, 22, 23) trägt, hinaus in Richtung der Vorwärtsbewegung der Schaufeln (11) verlängert ist, um einen Bereich zu bilden, in dem die in den Schaufeln (11) falsch ausgerichteten Teile (29a) automatisch ausgeschieden werden können, zum Beispiel durch einfaches Umkippen unter Einwirkung der Schwerkraft.

8. Automatischer Orientierungs- und Auswahlmechanismus für Teile nach Anspruch 7,
**dadurch gekennzeichnet, dass** jenseits des Bereichs zum Umkippen und zur Ausscheidung der falsch ausgerichteten Teile (29a) feststehende Führungen (27) vorgesehen sind, die die erste Endloskette (9) und ihre Schaufeln (11) um ihr Antriebs- (13) oder Getrieberad (16) herum und entlang eines Abschnitts ihres unteren Stranges umgeben, um den Halt der richtig ausgerichteten Teile (29) bis zu einem Freigabepunkt zu gewährleisten, an dem diese ausgerichteten Teile (29) von anderen Transport- oder Verarbeitungsmitteln übernommen werden können, die außerhalb des Lenkund Auswahlmechanismus (8) sind.

9. Automatischer Orientierungs- und Auswahlmechanismus für Teile nach einem der Ansprüche 1 bis 8,
**dadurch gekennzeichnet, dass** die Mittel zum Anordnen der Teile (29) in Form eines Lamellenverteilers (7) verwirklicht sind, der die Teile (29) aus einem Rumpf zur Lagerung von Massengut (1) heraufbefördert und sie mit einer horizontalen Vorausrichtung freigibt.

10. Automatischer Orientierungs- und Auswahlmechanismus für Teile nach Anspruch 9,
**dadurch gekennzeichnet, dass** sich eine schiefe Gleitfläche (25), die parallel zur Ebene der ersten Endloskette (9) ist, zwischen der Spitze des Lamellenverteilers (7) und dem Bereich der zwei Ketten (9, 10) erstreckt.
